# EUROPÄISCHE PATENTSCHRIFT

(11) **EP 0 347 883 B1**
(45) Veröffentlichungstag und Bekanntmachung des Hinweises auf die Patenterteilung: **14.09.1994**
(21) Anmeldenummer: 89111303.7
(22) Anmeldetag: 21.06.1989
(51) Int. Cl.: G01M 1/20, G01M 1/22

(54) **Verfahren und Vorrichtung zum Auswuchten von rotierenden Teilen**
Process and device for balancing rotating parts
Procédé et dispositif d'equilibrage de pièces en rotation

(30) Priorität: 23.06.1988 DE 3821239
(43) Veröffentlichungstag der Anmeldung: 27.12.1989
(73) Patentinhaber: Walter Dittel GmbH Luftfahrtgerätebau, D-86899 Landsberg (DE)
(72) Erfinder: Franz, Otto, D-8910 Landsberg (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-A- 2 127 268
- US-A- 4 020 423

## Beschreibung

Die Erfindung betrifft ein Verfahren zum Auswuchten von rotierenden Teilen gemäß dem Oberbegriff des Anspruchs 1, bei dem an dem auszuwuchtenden Teil Kompensationsmassen angeordnet werden, und eine Vorrichtung insbesondere zur Durchführung des Verfahrens gemäß dem Oberbegriff des Anspruchs 4.

Das Auswuchten von rotierenden Teilen, insbesondere von rotierenden Teilen an Schleifmaschinen, wie der Schleifmaschinenspindel, erfolgt im wesentlichen durch Materialzugabe, Materialabtragung oder durch Verschiebung von Massen zur Kompensation der Unwuchtmasse. Ist dabei die Lage der Unwuchtmasse oder die Lagen der möglichen Kompensationsmassen im rotierenden System, das durch das rotierende Teil und die Kompensationsmassen gebildet wird, unbekannt, wird zum Auswuchten ein Verfahren der eingangs genannten Art verwendet.

Hierzu benutzt man im allgemeinen einen Vorrichtung zum Auswuchten mit einem elektrischen Beschleunigungsaufnehmer, der die Beschleunigung des aus dem rotierenden Teil und den Kompensationsmassen gebildeten rotierenden Systems erfaßt und dessen Ausgangssignal über eine Integratorschaltung und einen Filter an eine Gleichrichterschaltung geführt ist, und mit einer Ablaufsteuerschaltung zum Minimieren der Unwucht, die Steuersignale für eine Änderung von Größe und/oder Lage der Kompensationsmassen des rotierenden Systems während einzelner Minimierungsvorgänge liefert und der von der Gleichrichterschaltung ein Signal zur Ablaufsteuerung des Auswuchtens zugeführt ist.

Die mittels des Gleichrichters gewonnene Gleichspannung stellt dabei ein Maß für die Schwinggeschwindigkeit des rotierenden Teils, z.B. der Schleifmaschinenspindel, dar und kann neben der Verwendung zur Ablaufsteuerung des Auswuchtverfahrens auch zur Unwuchtanzeige verwendet werden. Die für das Auswuchten verwendete Kompensationsmasse wird meistens in zwei oder mehrere Teilmassen aufgeteilt, wobei sie nach Lage und Größe vektoriell addiert werden.

Bei mechanischen Auswuchtvorrichtungen werden hauptsächlich zwei Teilmassen im rotierenden System verschoben, während bei Hydro-Auswuchtvorrichtungen Flüssigkeit in drei oder mehr Kammern im rotierenden System eingebracht werden.

Das Auswuchten erfolgt in einzelnen Minimierungsvorgängen, wobei die Teilkompensationsmassen nacheinander bzw. gleichzeitig in ihrer Lage verschoben oder nacheinander in ihrer Größe verändert werden.

Erzeugt eine Verschiebung bzw. Veränderung einer Teilkompensationsmasse eine Verschlechterung der Unwucht, so wird der gerade durchgeführte Minimierungsvorgang beendet und ein weiterer Minimierungsvorgang wird eingeleitet, bei dem die nächste Teilkompensationsmasse verändert oder die Verschiebungsart der Teilkompensationsmasse abgewandelt wird. Hierzu werden von der Ablaufsteuerschaltung in Abhängigkeit vom Ausgangssignal der Gleichrichterschaltung entsprechende Weiterschaltbefehle erzeugt. Die Unwucht des auszuwuchtenden rotierenden Systems nimmt dabei stufenweise ab.

Ein Nachteil des beschriebenen Auswuchtverfahrens besteht darin, daß es nur dann zufriedenstellend arbeitet, wenn dem der Unwucht entsprechenden Signal für die Schwinggeschwindigkeit keine Störsignale überlagert sind. Zur Störunterdrückung werden meist schmalbandige Filter verwendet, die auf die Drehzahl der auszuwuchtenden Schleifmaschine abgestimmt sind.

In der Praxis können jedoch Störungen auftreten, die durch Mehrfachantriebe oder benachbarte Maschinen mit fast gleicher Drehzahl verursacht werden und die mit dem schmalbandigen Filter nicht unterdrückt werden können. Derartige Störungen, deren Frequenz nahe benachbart der Frequenz des der Gleichrichterschaltung zugeführten Signals liegt, führen zu Schwebungen in dem der Gleichrichterschaltung zugeführten Signal, so daß auch das der Unwucht entsprechende Ausgangssignal der Gleichrichterschaltung infolge der Schwebung zunimmt und damit eine nicht vorhandene Zunahme der Unwucht anzeigt. Auf diese Weise können durch Störungen hervorgerufene Schwebungen das Auswuchten in einzelnen Minimierungsvorgängen stören und praktisch unmöglich machen.

Aus der DE-OS 21 27 268 ist ein Verfahren und eine Vorrichtung zum Bestimmen von Unwuchten in sich drehenden Körpern bekannt, mit dem bzw. bei der in einem ersten Speicher die elektrischen Signale abgespeichert werden, die von einer Aufnehmereinheit aus den von der Unwucht des sich drehenden Körpers ohne ein bestimmtes Korrekturgewicht resultierenden Schwingungen ermittelt werden, und in einem zweiten Speicher die elektrischen Signale abgespeichert werden, die von der Aufnehmereinheit aus den von der Unwucht des sich drehenden Körpers mit dem bestimmten Korrekturgewicht resultierenden Schwingungen ermittelt werden. Die Abspeichervorgänge werden vom Bedienpersonal manuell vorgenommen. Erst nach Abschluß der Unwuchtsmessungen ist ein Auswerten der abgespeicherten Signale möglich. Dabei werden durch Betätigen eines Funktionsschalters die abgespeicherten Signale nacheinander unter Zwischenschaltung eines Differenzverstärkers an ein Meßgerät angelegt, wobei bei Anlegen des Signals aus dem ersten Speicher durch Verstellen eines Widerstandes der Zeiger des Meßgeräts auf eine Einstellmarkierung eingestellt wird und bei Anlegen des im zweiten Speicher abgespeicherten Signals die Unwucht unmittelbar vom Meßgerät abgelesen werden kann.

Nachteilig bei dieser Vorrichtung und bei diesem Verfahren ist, daß die einzelnen Verfahrensschritte vom Bedienpersonal manuell ausgeführt werden müssen und daß durch Schwebungen verursachte Störungen den Meßvorgang und das Meßergebnis verfälschen können.

Aus der US 4 020 423 ist ein Verfahren zum Erzeugen und übertragen eines elektrischen Referenzpulses bekannt, wodurch die Winkelposition einer Unwucht eines rotierenden Körpers relativ zur Rotation dieses Körpers bestimmt werden kann. Der Körper ist mit einer Markierung versehen sind, mittels derer die Rotation des Körpers erfaßt wird. Die in exakte Rechtecksignale umgewandelten Abtastsignale einer Abtasteinrichtung werden über einen Integrator einem Speicher und einem Komparator zugeleitet, dessen Ausgang dann ein negatives Ausgangssignal liefert, wenn die Signalhöhe des Integrators gerade die halbe Impulshöhe eines vorhergehenden im Speicher abgespeicherten Pulssignals erreicht hat.

Dieses Verfahren kann zur Unwuchtsbestimmung bei rotierenden Körpern nicht angewendet werden.

Die Aufgabe der vorliegenden Erfindung ist es, ein Verfahren und eine Vorrichtung der eingangs genannten Art zu schaffen, bei dem bzw. bei der das Auswuchten nicht durch störungsbedingte Schwebungen verhindert wird.

Diese Aufgabe wird bei einem Verfahren der eingangs genannten Gattung erfindungsgemäß durch die im kennzeichnenden Teil des Anspruchs 1 beschriebenen Merkmale gelöst.

In besonders vorteilhafter Weise läßt sich dieses Verfahren mit einer Vorrichtung der eingangs genannten Gattung durchführen, die die im kennzeichnenden Teil des Anspruchs 4 aufgeführten Merkmale aufweist.

Erfindungsgemäß wird also nicht einfach ein der Unwucht entsprechendes Signal daraufhin überwacht, ob es ansteigt oder nicht, sondern es wird während einer Meßzeit der Spitzenwert der Schwinggeschwindigkeit überwacht, wobei der maximale Spitzenwert erfaßt und gespeichert wird, um anschließend während einer nächsten Meßzeit ständig mit dem nun ermittelten Spitzenwert der Schwinggeschwindigkeit verglichen werden zu können. Wird nun bei dem Vergleich des gespeicherten Spitzenwertes mit dem gerade vorliegenden Spitzenwert der Schwinggeschwindigkeit festgestellt, daß der aktuelle Wert der Schwinggeschwindigkeit größer wird als der gespeicherte, so liegt tatsächlich eine echte Vergrößerung der Unwucht des rotierenden Systems vor, so daß ein weiterer Minimierungsvorgang eingeleitet werden kann.

Bei einem besonders vorteilhaften Ausführungsbeispiel der Erfindung ist vorgesehen, daß die Meßzeit zwischen 2 s und 10 s beträgt, vorzugsweise 2 s, um kurze Auswuchtabläufe zu erreichen und bei Bedarf bis 10 s verlängert wird, um sicherzustellen, daß die Dauer der Meßzeit zumindest gleich oder vorzugsweise größer als die Periode einer möglichen Schwebung ist.

Durch die erfindungsgemäße Verwendung von Meßzeiten, die wesentlich größer als die Periode der Schwinggeschwindigkeit sind, und deren Dauer zumindest gleich oder vorzugsweise größer als die Periode einer möglichen Schwebung ist, wird erreicht, daß während einer Meßzeit der maximale durch eine Schwebung bewirkte Spitzenwert der Schwinggeschwindigkeit erfaßt wird und dann für das weitere Auswuchtverfahren zur Verfügung steht. Gleichzeitig wird jedoch durch den ständigen Vergleich des während der aktuellen Meßzeit vom Spitzenwertgleichrichter gelieferten Spannungssignal, das dem Spitzenwert der Schwinggeschwindigkeit entspricht, erreicht, daß eine Zunahme der Unwucht unmittelbar und nicht erst am Ende der relativ langen Meßzeit erfaßt wird.

Somit wird der nächste Minimierungsvorgang eingeleitet, sobald das mit dem gerade durchgeführten Minimierungsvorgang erreichbare Minimum der Unwucht gerade überschritten ist.

Das erfindungsgemäße Verfahren stellt somit nicht nur sicher, daß schwebungsbedingte Störungen keinen Einfluß auf das Auswuchten haben, sondern auch, daß der Auswuchtvorgang selber optimal durchgeführt wird.

Durch die für die praktische Durchführung des erfindungsgemäßen Verfahrens besonders vorteilhafte erfindungsgemäße Vorrichtung nach Anspruch 4 wird eine schaltungstechnisch einfach aufzubauende und zuverlässige Schaltung geschaffen.

Bei einer ersten praktischen Ausführungsform der erfindungsgemäßen Vorrichtung ist vorgesehen, daß die Speicher- und Vergleichsschaltung einen ihrem Eingang nachgeschalteten, löschbaren ersten Kondensator aufweist, der das anliegende Ausgangssignal des Spitzenwertgleichrichters während einer Meßzeit speichert, wobei an den ersten Kondensator eine Halteschaltung angeschlossen ist, die von einem ersten Zeitsignal der Ablaufsteuerschaltung beaufschlagt ist, um nach Ablauf einer Meßzeit das im ersten Kondensator gespeicherte, dem Spitzenwert der Schwinggeschwindigkeit während der Meßzeit entsprechende Ausgangssignal des Spitzenwertgleichrichters zu übernehmen.

Hierdurch wird mittels einfacher elektronischer Bauteile bewirkt, daß die miteinander zu vergleichenden, die entsprechenden Spitzenwerte der Schwinggeschwindigkeit darstellenden Signale stets in gleicher analoger Form für eine weitere Verarbeitung zur Verfügung stehen.

Ein weiteres Ausführungsbeispiel der Erfindung zeichnet sich dadurch aus, daß der erste Kondensator und ein Ausgang der Halteschaltung an einen Komparator angelegt sind, dessen Ausgangssignal als Ausgangssignal der Speicher- und Vergleichsschaltung an die Ablaufsteuerschaltung angelegt ist.

Bei einer vorteilhaften Weiterbildung der Erfindung ist vorgesehen, daß parallel zum ersten Kondensator ein Löschschalter geschaltet ist, der von einem zweiten Zeitsignal der Ablaufsteuerschaltung schließbar ist. Hierdurch läßt sich erreichen, daß am Ende jeder Meßzeit nach der Übergabe des den maximalen Spitzenwert der Schwinggeschwindigkeit darstellenden Spannungssignal vom ersten Kondensator an die Halteschaltung dieser gelöscht werden kann, so daß während der darauffolgenden Meßzeit eindeutig definierte Signale vorliegen.

Bei einer anderen Weiterbildung der Erfindung ist schließlich vorgesehen, daß die Halteschaltung eingangsseitig ein Sampel- and -Hold-Glied, das vom ersten Zeitsignal beaufschlagt ist, und ausgangsseitig einen zweiten Kondensator aufweist, der mit dem Sampel- and -Hold-Glied verbunden ist.

Die Erfindung wird im folgenden beispielsweise anhand der Zeichnung näher erläutert, in dieser zeigt:
- Fig. 1: ein schematisches Blockschaltbild einer Vorrichtung zum Auswuchten von rotierenden Teilen, und
- Fig. 2: den zeitlichen Verlauf eines gestörten, der Schwinggeschwindigkeit entsprechenden Spannungssignals, den zeitlichen Verlauf des Ausgangssignals eines Spitzengleichrichters sowie den zeitlichen Verlauf der Unwucht beim Auswuchten.

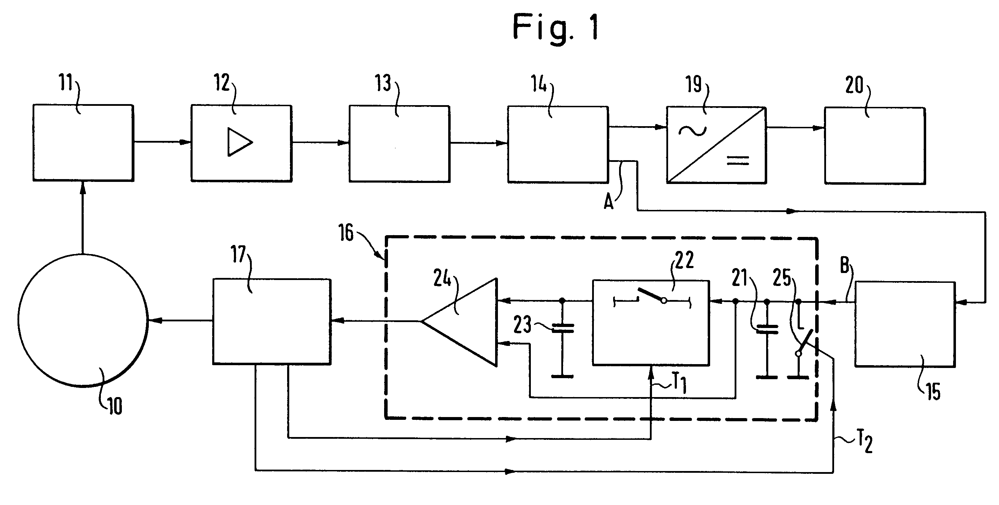

Wie in Fig. 1 gezeigt, besitzt die Vorrichtung zum Auswuchten eines rotierenden Systems 10, das in nicht näher dargestellter Weise aus einem rotierenden Teil, insbesondere einer Schleifmaschinenspindel, und aus Kompensationsmassen besteht, einen elektrischen Beschleunigungsaufnehmer 11, der ein Meßsignal liefert, das der Schwingbeschleunigung des rotierenden Systems 10 entspricht. Das Meßsignal des Beschleunigungsaufnehmers 11 wird über einen Verstärker 12 an einen Integrator 13 angelegt, dessen Ausgangssignal infolge der Integration der Schwinggeschwindigkeit des rotierenden Systems 10 entspricht und damit ein Maß für dessen Unwucht darstellt.

Das Ausgangssignal des Integrators 13 wird über einen Filter 14 zum einen an einen normalen Gleichrichter 19 angelegt, dessen Ausgangsgleichspannung einer Anzeigevorrichtung 20 für die Unwucht zugeführt ist. Zum anderen wird das Ausgangssignal A des Filters 14 an einen Spitzenwertgleichrichter 15 geführt.

Das Ausgangssignal B des Spitzenwertgleichrichters 15, das dem Verlauf der Spitzenwerte der Schwinggeschwindigkeit, also der Amplitude der Schwinggeschwindigkeit entspricht, ist an eine Speicher - und Vergleichsschaltung 16 geführt, deren Ausgangssignal an den Signaleingang einer Ablaufsteuerschaltung 17 angelegt ist, um den Logikbefehl für das Weiterschalten der Ablaufsteuerung von einem Minimierungsvorgang zum nächsten zu erzeugen. Die Ablaufsteuerschaltung 17 beaufschlagt ihrerseits das rotierende System so, daß die einzelnen Kompensationsmassen zum Auswuchten in ihrer Größe und/oder ihrer Lage innerhalb des rotierenden Systems verändert werden.

Die Speicher- und Vergleichsschaltung 16 besitzt einen ersten Kondensator 21, der mit dem Ausgang des Spitzenwertgleichrichters 15 verbunden ist, um das dem Spitzenwert der Schwinggeschwindigkeit entsprechende Signal B während einer Meßzeit Tᵢ zu speichern. Dabei wird jeweils der während dieser Meßzeit Tᵢ auftretende Maximalwert des Signals B gespeichert.

Der erste Kondensator 21 ist zum einen an einen Eingang eines Sample- and -Hold-Gliedes 22 und zum anderen an einen Eingang eines Komparators 24 angelegt. Der Ausgang des Sample- and -Hold-Gliedes 22 ist an einen zweiten Kondensator 23 und an einen anderen Eingang des Komparators 24 geführt. Das Sample- and -Hold-Glied 22 wird von der Ablaufsteuerschaltung 17 mit einem ersten Zeitsignal T₁ beaufschlagt, um jeweils am Ende einer Meßzeit Tᵢ das im ersten Kondensator 21 gespeicherte Signal Bᵢ zu übernehmen und im zweiten Kondensator 23 abzuspeichern. Ein ggfs. im zweiten Kondensator 23 gespeichertes Signal wird dabei überschrieben.

Parallel zum ersten Kondensator 21 ist schließlich ein Löschschalter 25 geschaltet, der mittels eines zweiten Zeitsignals T₂, das von der Ablaufsteuerschaltung 17 geliefert wird, um den ersten Kondensator 21 zu löschen und für eine neue Spitzenwertspannungsspeicherung freizugeben, beaufschlagt wird.

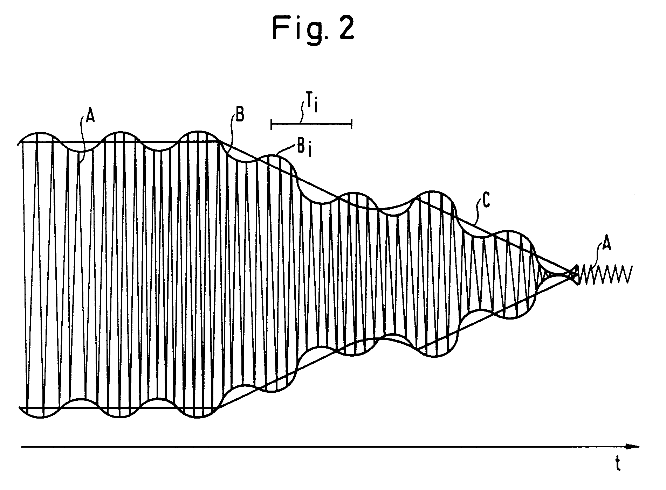

Im folgenden wird die Funktionsweise der beschriebenen Vorrichtung erläutert:
Das Vom Beschleunigungsaufnehmer 11 gelieferte Meßsignal wird über den Verstärker 12 und den Integrator 13 in ein der Schwinggeschwindigkeit des rotierenden Systems 10 proportionales Signal gewandelt, aus dem mittels des Filters 14 Störanteile weitgehend beseitigt werden. Liegt jedoch ein Störanteil im Ausgangssignal des Integrators 13 vor, dessen Frequenz nahe der Durchlaßfrequenz des Filters 14 ist, die auf die Schwingfrequenz des rotierenden Systems 10 abgestimmt ist, so kann diese Störung das Filter 14 ebenfalls passieren, so daß das Ausgangssignal A des Filters 14 eine Schwebung aufweist, wie in Fig. 2 dargestellt.

Das der Schwinggeschwindigkeit entsprechende Ausgangssignal A des Filters 14 wird vom Spitzenwertgleichrichter 15 in ein Spannungssignal B umgewandelt, dessen Verlauf dem Verlauf der Amplitude der Schwinggeschwindigkeit entspricht. Das Ausgangssignal B des Spitzenwertgleichrichters 15 weist dabei einen Verlauf auf, der der durch die Störung bewirkten Schwebung entspricht.

Während einer Meßzeit Tᵢ, die in Fig. 2 als Balken dargestellt ist, wird nun das Ausgangssignal B dem ersten Kondensator 21 zugeführt, der nach Erreichen des in der Meßzeit Tᵢ auftretenden maximalen Wertes Bᵢ des Ausgangssignals B diesen speichert und bewirkt, daß der Maximalwert Bᵢ am Komparator 24 anliegt. Am Ende der Meßzeit Tᵢ erzeugt die Ablaufsteuerschaltung 17 das erste Zeitsignal T₁, woraufhin das Sample- and -Hold-Glied 22 den im ersten Kondensator 21 gespeicherten Spannungswert Bᵢ übernimmt und an den zweiten Kondensator 23 weitergibt. Danach wird von der Ablaufsteuerschaltung 17 das zweite Zeitsignal T₂ erzeugt, das das Schließen des Löschschalters 25 bewirkt, so daß der erste Kondensator 21 gelöscht und für eine weitere Speicherung während der nächsten Meßzeit freigegeben ist.

Während der nächsten Meßzeit werden sowohl der Kondensator 21 als auch der Komperator 24 erneut mit dem vom Spitzenwertgleichrichter 15 gelieferten Spannungssignal B beaufschlagt. Bleibt dabei der maximale Spannungswert des Spannungssignals B kleiner als der im zweiten Kondensator 23 gespeicherte Spannungswert, so erfolgt am Ende der Meßzeit wie beschrieben die Übergabe des im ersten Kondensator 21 gespeicherten Spannungswertes mittels des Sample- and -Hold-Gliedes 22 an den zweiten Kondensator 23, wonach der erste Kondensator 21 wiederum gelöscht wird. Übersteigt jedoch während einer Meßzeit Tᵢ das am ersten Kondensator 21 anliegende Spannungssignal B das im zweiten Kondensator 23 gespeicherte Spannungssignal Bᵢ, so erzeugt der Komperator 24 ein Logiksignal, das der Ablaufsteuerschaltung 17 zugeführt ist, die daraufhin das Weiterschalten der Ablaufsteuerung auf einen anderen Minimierungsvorgang bewirkt.

Auf diese Weise ergibt sich eine stuftenweise Abnahme der Unwucht des rotierenden Systems 10 während des Auswuchtens, wie in Fig. 2 durch die Kurve C dargestellt ist.

Nach dem Auswuchten, also nachdem die Unwucht des rotierenden Systems beseitigt ist, verbleibt im Ausgangssignal A des Filters 14 nur noch der von der Störung hervorgerufenen Anteil, wie in Fig. 2 ganz rechts dargestellt.

## Patentansprüche

1. Verfahren zum Auswuchten von rotierenden Teilen, bei dem an dem auszuwuchtenden Teil Kompensationsmassen angeordnet werden,
bei dem die Schwingbeschleunigung des aus rotierendem Teil und Kompensationsmassen gebildeten rotierenden Systems gemessen und anschließend integriert wird, um die Schwinggeschwindigkeit des rotierenden Systems zu erhalten,
bei dem aus der Schwinggeschwindigkeit ein Maß für die Unwucht ermittelt wird und
bei dem die einzelnen Kompensationsmassen während eines Minimierungsvorgangs beim Auswuchten in ihrer Größe und/oder in ihrer Lage im rotierenden System Verändert werden, bis die Unwucht während des aktuellen Minimierungsvorgangs wieder zunimmt, worauf der Minimierungsvorgang beendet und ein weiterer Minimierungsvorgang eingeleitet wird,
dadurch **gekennzeichnet,**
daß während eines Minimierungsvorgangs der maximale Spitzenwert der Schwinggeschwindigkeit während einer Meßzeit (Tᵢ) erfaßt und gespeichert wird,
daß der Spitzenwert der Schwinggeschwindigkeit während der gerade laufenden Meßzeit (Tₙ) mit dem Spitzenwert der Schwinggeschwindigkeit der unmittelbar vorhergehenden Meßzeit (Tₙ₋₁) verglichen wird und
daß der nächste Minimierungsvorgang eingeleitet wird, sobald der während der gerade laufenden Meßzeit (Tₙ) festgestellte Spitzenwert der Schwinggeschwindigkeit größer ist als der gespeicherte maximale Spitzenwert der Schwinggeschwindigkeit der vorhergehenden Meßzeit (Tₙ₋₁).

2. Verfahren nach Anspruch 1,
dadurch **gekennzeichnet,**
daß die Dauer der Meßzeit (Tᵢ) ein Vielfaches der Periode der Schwinggeschwindigkeit beträgt und vorzugsweise gleich oder größer ist als die Periode einer möglichen Schwebung.

3. Verfahren nach Anspruch 2,
dadurch **gekennzeichnet,**
daß die Dauer der Meßzeit (Tᵢ) zwischen 2 s und 10 s, vorzugsweise 2 s und 7 s liegt und insbesondere etwa 2 s beträgt.

4. Vorrichtung zum Auswuchten von rotierenden Teilen insbesondere nach einem Verfahren nach einem der vorhergehenden Ansprüche,
mit den rotierenden Teilen zugeordneten Kompensationsmassen,
mit einem elektrischen Beschleunigüngsaufnehmer (11), der die Beschleunigung des aus dem rotierenden Teil und den Kompensationsmassen gebildeten rotierenden Systems erfaßt
und dessen Ausgangssignal über eine Integratorschaltung (13) und einen Filter (14) als Maß für die Schwinggeschwindigkeit des rotierenden Systems an eine Spitzenwert-Gleichrichterschaltung (15) geführt ist, dessen Ausgangssignal an eine Speicher- und Vergleichsschaltung (16) geführt ist und
mit einer von der Speicher- und Vergleichsschaltung (16) beaufschlagten Ablaufsteuerschaltung (17) zum Minimieren der Unwucht, die Steuersignale für eine Änderung von Größe und/oder Lage der Kompensationsmassen des rotierenden Systems während einzelner Minimierungsvorgänge liefert und der von der Gleichrichterschaltung ein Signal zur Ablaufsteuerung des Auswuchtens zugeführt ist,
dadurch **gekennzeichnet,** daß,
die Speicher- und Vergleichsschaltung (16) einen ersten Speicher (21) zur Speicherung eines innerhalb einer bestimmten Meßzeit (Tₙ) auftretenden Spitzenwerts der Schwinggeschwindigkeit, einen zweiten Speicher (23) zur Speicherung des in einem vorangehenden Zeitintervall (Tₙ₋₁) aufgetretenen Spitzenwerts der Schwinggeschwindigkeit und einen Komparator (24) aufweist, der die im ersten und zweiten Speicher (21) bzw. (23) gespeicherten Spitzenwerte vergleicht und an die Ablaufsteuerschaltung (17) angeschlossen ist und diese zur Einleitung eines weiteren Minimierungsvorgangs veranlaßt, sobald der im zweiten Speicher (23) festgehaltene Spitzenwert der Schwinggeschwindigkeit größer ist als der im ersten Speicher (21) festgehaltene Spitzenwert der Schwinggeschwindigkeit.

5. Vorrichtung nach Anspruch 4,
dadurch **gekennzeichnet,**
daß die Speicher- und Vergleichsschaltung (16) einen ihrem Eingang nachgeschalteten, löschbaren ersten Kondensator (21) aufweist, der das anliegende Ausgangssignal des Spitzenwertgleichrichters (15) während einer Meßzeit (Tᵢ) speichert.

6. Vorrichtung nach Anspruch 5,
dadurch **gekennzeichnet,**
daß an den ersten Kondensator (21) eine Halteschaltung (22, 23) angeschlossen ist, die von einem ersten Zeitsignal der Ablaufsteuerschaltung (17) beaufschlagt ist, um nach Ablauf einer Meßzeit (Tᵢ) das im ersten Kondensator (21) gespeicherte, dem Spitzenwert der Schwinggeschwindigkeit während der Meßzeit (Tᵢ) entsprechende Ausgangssignal des Spitzenwertgleichrichters (15) zu übernehmen.

7. Vorrichtung nach Anspruch 6,
dadurch **gekennzeichnet,**
daß der erste Kondensator (21) und ein Ausgang der Halteschaltung (22, 23) an einen Komparator (24) angelegt sind, dessen Ausgangssignal als Ausgangssignal der Speicher- und Vergleichsschaltung (16) an die Ablaufsteuerschaltung (17) angelegt ist.

8. Vorrichtung nach Anspruch 5 bis 7,
dadurch **gekennzeichnet,**
daß parallel zum ersten Kondensator (21) ein Löschschalter (25) geschaltet ist, der von einem zweiten Zeitsignal der Ablaufsteuerschaltung (17) schließbar ist.

9. Vorrichtung nach Anspruch 6 bis 8,
dadurch **gekennzeichent,**
daß die Halteschaltung eingangsseitig ein Sample-and-Hold-Glied (22), das vom ersten Zeitsignal beaufschlagt ist, und ausgangsseitig einen zweiten Kondensator (23) aufweist, der mit dem Sample- und Hold-Glied (22) verbunden ist.

## Claims

1. A method of balancing rotating parts in which compensation masses are arranged on the part to be balanced, wherein the oscillatory acceleration of the rotating system formed by the rotating part and the compensation masses is measured and is subsequently integrated in order to obtain the oscillatory speed of the rotating system, wherein a measure for the imbalance is found from the oscillatory speed and wherein the individual compensation masses are changed in their size and/or in their position in the rotating system during a minimisation process during balancing until the imbalance starts to increase again during the actual minimisation process, whereupon the minimisation process is terminated and a further minimisation process is commenced,
**characterised in that** during a minimisation process the maximum peak value of the oscillatory speed is detected and stored during a measurement time T₁; in that the peak value of oscillatory speed is compared during the measurement time Tₙ which is just running with the peak value of the oscillatory speed of the directly preceding measurement time (Tₙ₋₁), and in that the next minimisation process is commenced as soon as the peak value of the oscillatory speed found during the measurement time Tₙ which has just expired is larger than the stored maximum peak value of the oscillatory speed of the preceding measurement time (Tₙ₋₁).

2. Method in accordance with claim 1,
**characterised in that** the duration of the measurement time (Tᵢ) amounts to a multiple of the period of the oscillatory speed and is preferably the same as or larger than the period of a possible beat.

3. Method in accordance with claim 2,
**characterised in that** the duration of the measurement time (Tᵢ) lies between 2 s and 10 s, preferably 2 s and 7 s, and in particular amounts to about 2 s.

4. Apparatus for balancing rotating parts, with compensation masses associated with the rotating parts, with an electrical acceleration pick-up (11) which detects the acceleration of the rotating system formed by the rotating part and the compensation masses, the output signal of which is led via an integration circuit (13) and a filter (14) as a measure for the oscillatory speed of the rotating system to a peak value rectifier circuit (15), the output signal of which is led to a storage and comparison circuit (16), and with a run-off control circuit (17) acted on by the memory and comparison circuit (16) for minimising the imbalance and which delivers control signals for the changing of the size and/or position of the compensation masses of the rotating system during individual minimisation processes and to which a signal for the run-off control of the balancing is supplied from the rectifier circuit,
**characterised in that** the memory and comparison circuit (16) has a first memory (21) for storing a peak value of the oscillatory speed arising within a specific measurement time (Tn), a second memory (23) for storing the peak value of the oscillatory speed occurring in a preceding time interval (Tₙ₋₁) and a comparator (4) which compares the peak values stored in the first and second memories (21 and 23 respectively) and is connected to the run-off control circuit (17) and causes this to start a further minimisation process as soon as the peak value of the oscillatory speed recorded in the second memory (23) is greater than the peak value of the oscillatory speed recorded in the first memory (21).

5. Apparatus in accordance with claim 4,
**characterised in that** the memory and comparison circuit (16) has an erasable first capacitor (21) connected after its input which stores the applied output signal of the peak value rectifier (15) during a measurement time (Tᵢ).

6. Apparatus in accordance with claim 5,
**characterised in that** a holding circuit (22, 23) is connected to the first capacitor (21) which is acted on by a first time signal of the run-off control circuit (17) in order, after the expiry of a measurement time (Tᵢ), to take over the output signal of the peak value rectifier (15) stored in the first capacitor (21) which corresponds to the peak value of the oscillatory speed during the measurement time (Tᵢ).

7. Apparatus in accordance with claim 6,
**characterised in that** the first capacitor (21) and an output of the holding circuit (22, 23) are applied to a comparator (24), the output signal of which is applied as an output signal of the memory and comparison circuit (16) to the run-off control circuit (17).

8. Apparatus in accordance with claim 5 to claim 7,
**characterised in that** an erasing switch (25) is connected parallel to the first capacitor (21) and is closable by a second time signal of the run-off control circuit (17).

9. Apparatus in accordance with claim 6 to 8,
**characterised in that** the holding circuit has a sample-and-hold circuit (22) at the input side which is acted on by the first time signal and has a second capacitor (23) at the output side which is connected to the sample-and-hold circuit (22).

## Revendications

1. Procédé pour équilibrer des pièces en rotation, procédé dans lequel on dispose des masses de compensation sur la pièce à équilibrer, on mesure l'accélération des oscillations du système en rotation formé par la pièce tournante et par les masses de compensation, et on intègre cette accélération d'oscillation afin d'obtenir la vitesse d'oscillation du système en rotation, on détermine à partir de la vitesse d'oscillation une mesure pour le déséquilibre, et lors d'une opération de minimisation lors de l'équilibrage, on modifie les masses de compensation individuelles quant à leur taille et/ou leur situation dans le système en rotation, jusqu'à ce que le déséquilibre augmente à nouveau pendant le processus de minimisation actuel, suite à quoi on arrête le processus de minimisation et on démarre un second processus de minimisation,
caractérisé en ce que pendant un processus de minimisation, on saisit et on mémorise la valeur de pointe maximum de la vitesse d'oscillation pendant une période de mesure (Tᵢ), en ce que la valeur de pointe de la vitesse d'oscillation pendant le temps de mesure qui vient juste de s'écouler (Tₙ) est comparée à la valeur de pointe de la vitesse d'oscillation du temps de mesure immédiatement précédent (Tₙ₋₁), et en ce que l'on démarre le processus de minimisation suivant dès que la valeur de pointe de la vitesse d'oscillation déterminée pendant la période de mesure qui vient juste de s'écouler (Tₙ) est supérieure à la valeur de pointe maximum mémorisée pour la vitesse d'oscillation de la période de mesure précédente (Tₙ₋₁).

2. Procédé selon la revendication 1, caractérisé en ce que la durée de la période de mesure (Tᵢ) est un multiple de la période de la vitesse d'oscillation, et en ce qu'elle est de préférence égale ou supérieure à la période d'un battement possible.

3. Procédé selon la revendication 2, caractérisé en ce que la durée de la période de mesure (Tᵢ) est comprise entre 2 secondes et 10 secondes, de préférence 2 secondes et 7 secondes, et est en particulier égale à environ 2 secondes.

4. Appareil pour l'équilibrage de pièces en rotation, en particulier selon un procédé selon l'une des précédentes revendications, comprenant des masses de compensation associées aux pièces en rotation, un capteur d'accélération électrique (11), qui saisit l'accélération du système tournant formé par la pièce en rotation et par les masses de compensation, et dont le signal de sortie est amené, via un circuit d'intégration (13) et un filtre (14) en tant que mesure pour la vitesse d'oscillation du système en rotation, à un circuit de redressement (15) des valeurs de pointe, dont le signal de sortie est amené à un circuit de mémorisation et de comparaison (16), et
comprenant un circuit de commande de déroulement (17) attaqué par le circuit de mémorisation et de comparaison (16), afin de minimiser le déséquilibre, le circuit de commande délivrant des signaux de commande pour une modification de la taille et/ou de la position des masses de compensation du système en rotation pendant des opérations individuelles de minimisation, et un signal pour la commande de déroulement de l'équilibrage étant fourni au circuit de commande depuis le circuit de redressement,
caractérisé en ce que le circuit de mémorisation et de comparaison (16) comprend une première mémoire (21) pour mémoriser une valeur de pointe de la vitesse d'oscillation qui se produit pendant une période de mesure déterminée (Tₙ), une seconde mémoire (23) pour mémoriser la valeur de pointe de la vitesse d'oscillation qui se produit pendant un intervalle de temps précédent (Tₙ₋₁), et un comparateur (24) qui compare les valeurs de pointe mémorisées dans la première mémoire (21) et la seconde mémoire (23), et qui est raccordé au circuit de commande de déroulement (17) et amène celui-ci à démarrer une seconde opération de minimisation dès que la valeur de pointe de la vitesse d'oscillation mémorisée dans la seconde mémoire (23) est supérieure à la valeur de pointe de la vitesse d'oscillation mémorisée dans la première mémoire (21).

5. Appareil selon la revendication 4, caractérisé en ce que le circuit de mémorisation et de comparaison (16) comporte un premier condensateur effaçable (21) branché suite à son entrée, lequel mémorise pendant une période de mesure (Tᵢ) le signal de sortie appliqué provenant du redresseur des valeurs de pointe (15).

6. Appareil selon la revendication 5, caractérisé en ce qu'un circuit d'arrêt (22, 23) est raccordé au premier condensateur (21), ce circuit d'arrêt étant attaqué par un premier signal temporel du circuit de commande de déroulement (17), afin de reprendre, après expiration d'une période de mesure (Tᵢ), le signal de sortie du redresseur des valeurs de pointe (15) correspondant à la valeur de pointe de la vitesse d'oscillation mémorisée dans le premier condensateur (21) pendant la période de mesure (Cᵢ).

7. Appareil selon la revendication 6, caractérisé en ce que le premier condensateur (21) et une sortie du circuit d'arrêt (22, 23) sont appliqués à un comparateur (24), dont le signal de sortie est appliqué en tant que signal de sortie du circuit de mémorisation et de comparaison (16) au circuit de commande de déroulement (17).

8. Appareil selon l'une des revendications 5 à 7, caractérisé en ce qu'il est prévu un commutateur d'effacement (25) branché parallèlement au premier condensateur (21), ce commutateur pouvant être fermé par un second signal temporel du circuit de commande de déroulement (17).

9. Appareil selon l'une des revendications 6 à 8, caractérisé en ce que le circuit d'arrêt comprend côté entrée un élément d'échantillonnage et de maintien (22) qui est attaqué par le premier signal temporel, et côté sortie un second condensateur (23) qui est relié à l'élément d'échantillonnage et de maintien (22).
